# EUROPÄISCHE PATENTSCHRIFT

(11) **EP 4 032 652 B1**
(45) Veröffentlichungstag und Bekanntmachung des Hinweises auf die Patenterteilung: **09.10.2024**
(21) Anmeldenummer: 21153490.4
(22) Anmeldetag: 26.01.2021
(51) Int. Cl.: B23K 26/082, B23K 26/26, B23K 26/044

(54) **MATERIALBEARBEITUNGSSYSTEM UND -VERFAHREN MITTELS LASERSTRAHL MIT WOBBEL-BEWEGUNG**
LASER BEAM MATERIAL PROCESSING SYSTEM AND PROCESS, WITH WOBBLE MOTION
SYSTÈME ET PROCÉDÉ D'USINAGE DE MATIÈRE AU MOYEN D'UN FAISCEAU LASER OSCILLANT

(43) Veröffentlichungstag der Anmeldung: 27.07.2022
(73) Patentinhaber: Precitec GmbH & Co. KG, 76571 Gaggenau-Bad Rotenfels (DE)
(72) Erfinder: Walde, Tom, 77652 Offenburg (DE); Moser, Rüdiger, 76316 Malsch (DE); Birmanns, Stefan, 8462 Rheinau (CH); Witt, Thomas, 76571 Gaggenau (DE); Kempf, Maurizio, 76857 Völkersweiler (DE); Shkarban, Igor, 76287 Rheinstetten (DE)
(74) Vertreter: Ter Meer Steinmeister & Partner

(56) Entgegenhaltungen:
- WO-A1-2020/047412
- DE-A1- 102007 035 485
- DE-A1- 102014 015 094
- US-A1- 2014 098 410

## Beschreibung

Die vorliegende Erfindung betrifft ein System zur Materialbearbeitung mittels Laserstrahl, aufweisend eine Ablenkeinheit zum Auslenken des Laserstrahls; und eine Wobbel-Einheit, die dazu eingerichtet ist, einer einem Bearbeitungspfad entsprechenden Vorschubbewegung des Laserstrahls mittels Steuern der Ablenkeinheit eine Wobbel-Bewegung des Laserstrahls entsprechend einer Wobbel-Figur und einer Wobbel-Frequenz zu überlagern.

### Hintergrund

### Stand der Technik

US 2016/0368089 A1 beschreibt einen Laserschweißkopf mit beweglichen Spiegeln, um Schweißvorgänge mit Wobbelmustern durchzuführen.

DE 102019210618 A1 beschreibt ein Laser-Werkstoffbearbeitungssystem, umfassend: eine Werkstoffmodifizierungsstrahlquelle zum Erzeugen eines Prozessstrahls; einen Bearbeitungskopf, der mit der Werkstoffmodifizierungsstrahlquelle gekoppelt ist und mindestens einen Prozessstrahl-Scanaktor zum Lenken und Bewegen des Prozessstrahls gemäß einem Wobbelmuster in mindestens einer Achse an einer Bearbeitungsstelle eines Werkstücks aufweist; und ein Steuersystem zum Steuern zumindest der Werkstoffmodifizierungsstrahlquelle, des Prozessstrahl-Scanaktors und eines Bildgebungsstrahl-Scanaktors, wobei das Steuersystem programmiert ist, den Bearbeitungskopf zu veranlassen, den Prozessstrahl in dem Wobbelmuster zu scannen. In einem Beispiel kann aufgrund eines kleineren Sichtfelds und Scanwinkels ein zweiter Spiegel kleiner dimensioniert werden, so dass ein Bewegen des zweiten Spiegels mit höheren Geschwindigkeiten ermöglicht wird.

DE 102014015094 A1 (offenbarend alle Merkmale und Schritte des Oberbegriffes der Ansprüche 1 und 8) und EP 3157706 A1 beschreiben ein Verfahren zum Laserstrahlschweißen von mindestens zwei Fügepartnern mittels optischer Nahtführung, wobei der Bearbeitungslaserstrahl durch eine Scannereinrichtung als Laserstrahlleitvorrichtung mit wenigstens einem gesteuert beweglichen Schwingspiegel eine optisch detektierte Führungskante entsprechend einem Soll-Schweißnahtverlauf abfährt. Es wird der optischen Nahtführung durch die Scannereinrichtung eine an die bauteilgeometrischen und/oder prozessualen Bedingungen angepasste hochfrequente Schwingspiegeloszillation mindestens eines Schwingspiegels überlagert.

WO 2020/047412 A1 beschreibt ein Laserschweißen eines ersten Metallsubstrats mit einem zweiten Metallsubstrat, bei dem ein Strahlabgabesystem konfiguriert ist, einen Eingangslaserstrahl zu empfangen und einen Ausgangslaserstrahl mit einem Strahlfleck zu erzeugen, der sich in einem vorbestimmten Muster entlang einer ersten und einer zweiten Achse bewegt, um einen Zielbereich zu bestrahlen.

DE 102007035485 A1 beschreibt eine Laserschweißvorrichtung mit einer mittels einer Roboteransteuerung manipulierbaren Robotervorrichtung zum Führen und Ausrichten eines Laserstrahls und mit einem von der Roboteransteuerung unabhängigen, der Roboteransteuerung überlagerten und auf die Ausrichtung des Laserstrahls wirkenden, geschlossenen Regelkreis zum Kompensieren von in der Robotervorrichtung auftretenden Schwingungen.

US 2014/098410 A1, beschreibt ein Verfahren zur Laserbearbeitung mit einem thermisch stabilisierten akusto-optischen Strahlablenker.

### Kurzfassung der Erfindung

Das eingangs genannte System zur Materialbearbeitung kann ein System zur Materialbearbeitung, insbesondere zum Laserstrahlschweißen oder -schneiden, sein, welches mit Hilfe der Ablenkeinheit, etwa eines Scanners, den Laserstrahl mit "Figuren" (z.B. Kreis, Achten, etc.) über das Werkstück führt. Hierzu wird einer "primären" Relativbewegung von Laserstrahl und Werkstück zusätzlich die Form der "Figur", welche eine Form einer Wobbel-Bewegung definiert, mit Hilfe des Scanners überlagert. Hierbei kann die primäre Relativbewegung zwischen Werkstück und Laserstrahl ebenfalls durch den Scanner oder aber durch eine andere Bewegungseinrichtung, wie beispielsweise ein Roboter, ein Portal oder ähnliches durchgeführt werden. Die Überlagerung dieser Primärbewegung durch eine Figur bewirkt eine positive Ausbildung der Schweißnaht, da hierdurch die Ausbildung und Breite des Schweißbads sowie die Vorwärmung und Abkühlung des Grundwerkstoffs bzw. des Schweißguts beeinflusst werden können.

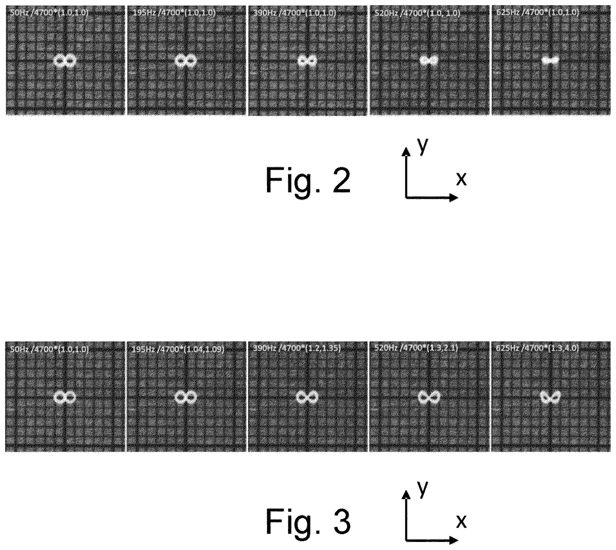

Eine Schwäche herkömmlicher 2D-Scannersysteme zur Überlagerung der primären Relativbewegung des Laserstrahls und des Werkstücks mit der Wobbel-Bewegung ist es, dass die Größe und Geometrie einer programmierten Figur sich bei höherer Wobbel-Frequenz, mit welcher die Figur durch den Scanner erzeugt wird, ändert. Ein Beispiel hierfür ist in Fig. 2 dargestellt.

Es ist eine Aufgabe der Erfindung, ein System zur Materialbearbeitung mittels Laserstrahl zu schaffen, bei dem der beschriebenen Mangel beseitigt oder zumindest vermindert ist.

Die Aufgabe wird durch ein System und ein Verfahren zur Materialbearbeitung mittels Laserstrahl entsprechend Ansprüchen 1 und 8 gelöst. Vorteilhafte Ausgestaltungen und Weiterbildungen sind Gegenstand abhängiger Ansprüche. Gemäß einem Aspekt der vorliegenden Offenbarung ist ein System zur Materialbearbeitung mittels Laserstrahl angegeben, aufweisend: eine Ablenkeinheit zum Auslenken des Laserstrahls; und eine Wobbel-Einheit, die dazu eingerichtet ist, einer einem Bearbeitungspfad entsprechenden Vorschubbewegung des Laserstrahls mittels Steuern der Ablenkeinheit eine Wobbel-Bewegung des Laserstrahls mit einer Wobbel-Figur und einer Wobbel-Frequenz zu überlagern, wobei die Wobbel-Einheit dazu eingerichtet ist, die Ablenkeinheit zum Ausführen der Wobbel-Bewegung gemäß einer kompensierten Wobbel-Bewegung zu steuern, bei der Steuerwerte für eine Auslenkung des Laserstrahls entlang der Wobbel-Figur in Abhängigkeit von der Wobbel-Frequenz angepasst sind und/oder eine entlang der Wobbel-Figur variierende Bahngeschwindigkeit in Abhängigkeit von einer Position des Laserstrahls in der Wobbel-Figur und von der Wobbel-Frequenz angepasst ist.

Auf diese Weise wird ein Figurwiedergabefehler vorkompensiert bzw. minimiert. Mit Figurwiedergabefehler wird hier eine Abweichung der Wobbel-Figur, d.h. der Form bzw. Geometrie, der Wobbel-Bewegung von einer gewünschten Wobbel-Figur bezeichnet, die dadurch entsteht, dass beim Steuern der Ablenkeinheit die tatsächliche Wobbel-Figur von der Wobbel-Frequenz abhängt. Daher muss zum Erreichen der gewünschten Wobbel-Figur bzw. der gewünschten Wobbel-Bewegung das Ansteuern der Ablenkeinheit entsprechend einer kompensierten Wobbel-Bewegung erfolgen, bei der eine Auslenkung des Laserstrahls und/oder eine Bahngeschwindigkeit entlang der Wobbel-Figur in Abhängigkeit von der Wobbel-Frequenz angepasst ist.

Die Vorschubbewegung kann auch als Relativbewegung des Laserstrahls und eines Werkstücks bezeichnet werden. Die Wobbel-Bewegung des Laserstrahls kann eine wiederholte Bewegung entlang einer vorgegebenen Wobbel-Figur mit einer vorgegebenen Wobbel-Frequenz bezeichnen. Die Wobbel-Frequenz kann hierbei die Frequenz bezeichnen, mit der die Wobbel-Figur während der Wobbel-Bewegung wiederholt wird. Die kompensierte Wobbel-Bewegung kann jeweils für eine Vielzahl von Wobbel-Frequenzen vorgegeben sein. Die kompensierte Wobbel-Bewegung kann z.B. experimentell bestimmt und in einer Nachschlagtabelle oder einem Speicher hinterlegt sein.

Durch das Steuern der Ablenkeinheit gemäß der kompensierten Wobbel-Bewegung kann daher eine Auslenkung des Laserstrahls, die der gewünschten Wobbel-Bewegung, insbesondere der gewünschten Wobbel-Figur, entspricht, erreicht werden. Insbesondere kann beim Steuern der Ablenkeinheit entsprechend der Steuerwerte eine Auslenkung des Laserstrahls entlang der gewünschten Wobbel-Bewegung, insbesondere der gewünschten Wobbel-Figur, erreicht werden bzw. es kann beim Ausführen der Wobbel-Bewegung mit der für die entsprechende Wobbel-Frequenz bestimmten Bahngeschwindigkeit ein Figurwiedergabefehler reduziert werden.

Das Überlagern kann als Modulieren bezeichnet werden. Durch die Wobbel-Bewegung wird somit eine Position des Laserstrahls in wenigstens einer Raumdimension moduliert, vorzugsweise in wenigstens zwei Raumdimensionen, entsprechend einer zweidimensionalen Wobbel-Figur.

Grundsätzlich wird durch Vorgabe einer Wobbel-Figur und einer Wobbel-Frequenz eine zu erzielende Wobbel-Bewegung des Laserstrahls definiert. Die Wobbel-Bewegung, welche der Wobbel-Figur entspricht, soll mit der vorgegebenen Wobbel-Frequenz ausgeführt werden. Durch Steuerung gemäß der kompensierten Wobbel-Bewegung kann insbesondere bei relativ hohen Wobbel-Frequenzen die tatsächliche Wobbel-Bewegung besser an die vorgegebene Wobbel-Figur angenähert werden. Eine Grundidee der Erfindung ist es, wenn mit zunehmender Wobbel-Frequenz die Figurtreue der Ablenkung (Auslenkung) des Laserstrahls schlechter wird, diesem Effekt entgegenzuwirken, z.B. durch gezieltes Verstärken von Bewegungsanteilen in Abhängigkeit von der Position in der Wobbel-Figur. Die kompensierte Wobbel-Bewegung kann als eine theoretische Wobbel-Bewegung verstanden werden, die sich unter Vernachlässigung von Massenträgheitseffekten und Materialnachgiebigkeiten und unter Vernachlässigung von Begrenztheiten von Geschwindigkeiten von Bewegungen der Ablenkeinheit theoretisch ergeben würde. Mit anderen Worten kann das Steuern gemäß der kompensierten Wobbel-Bewegung als ein Steuern mit kompensierten Steuerwerten verstanden werden. Die Begriffe Auslenkung und Ablenkung (des Laserstrahls) werden hierin austauschbar verwendet.

Steuerwerte oder -daten für die kompensierten Wobbel-Bewegungen können beispielsweise in einem Speicher vorgehalten werden. Steuerwerte oder -daten für eine jeweilige kompensierte Wobbel-Bewegung können beispielsweise in Form einer Sequenz von Steuergrößen zum Steuern der Ablenkeinheit ausgegeben werden.

Das Kompensieren des Figurwiedergabefehlers bedeutet, dass zur Kompensation eines erwarteten Figurwiedergabefehlers eine vorbestimmte Kompensation erfolgt. Somit wird nicht erst (allein) auf eine Abweichung von einer Soll-Bewegung reagiert, sondern es erfolgt schon im Vorhinein eine Steuerung der Ablenkeinheit basierend auf der die Kompensation enthaltenden kompensierten Wobbel-Bewegung. Die Kompensation wird somit vorweggenommen. Unabhängig davon kann die Ablenkeinheit, die Wobbel-Einheit und/oder eine Steuereinheit zum Ausgeben von elektrischen Steuersignalen an die Ablenkeinheit einen Regler für die Ausführung der Wobbel-Bewegung aufweisen; in diesem Fall kann durch das Kompensieren nicht nur eine bessere Figurtreue erreicht werden, sondern es kann beispielsweise auch ein bei zunehmender Wobbel-Frequenz trotz Regelung auftretender Figurwiedergabefehler vorkompensiert werden. Insbesondere kann ein Regelfehler vorkompensiert werden.

Wiedergabefehler der Wobbel-Figur können somit zumindest teilweise vorkompensiert werden. Somit kann dem Effekt entgegengewirkt werden, dass die Größe und Geometrie einer Wobbel-Figur sich mit zunehmender Frequenz, mit welcher die entsprechende Wobbel-Bewegung durch die Ablenkeinheit erzeugt wird, ändert. Ein solcher Effekt kann beispielsweise durch die Massenträgheit bewegter Teile der Ablenkeinheit bedingt sein, da die Trägheit sich mit zunehmender Bewegungsfrequenz stärker auswirkt und an Abschnitten der Wobbel-Figur ein Hinterherbleiben der aktuellen, tatsächlichen Wobbel-Position hinter der theoretischen Wobbel-Position gemäß der Bewegung entlang der Wobbel-Figur verursacht. Dadurch bedingten Abweichungen der tatsächlichen (Ist-)Wobbel-Bewegung von einer der Wobbel-Figur entsprechenden idealen Wobbel-Bewegung kann durch das Vorsehen unterschiedlicher kompensierten Wobbel-Bewegungen im Voraus entgegengewirkt werden.

Durch verbesserte Gewährleistung der Figurwiedergabetreue können zudem Prozessparameter, beispielsweise Laserleistung, Wobbel-Frequenz und Vorschubgeschwindigkeit in bestimmten Bereichen bei nahezu gleichbleibender Schweißnahtqualität linear miteinander erhöht werden. Es kann also die Skalierbarkeit von gefundenen Prozessparametern verbessert werden.

Somit kann insbesondere bei einer gesteigerten Bearbeitungsgeschwindigkeit eine entsprechende Erhöhung der Wobbel-Frequenz unter weitestgehender Beibehaltung der Wobbel-Figur, d.h. Größe bzw. Amplitude und Form (Geometrie), der Wobbel-Bewegung erfolgen. Es können beispielsweise Wobbel-Frequenzen in einem Bereich von weniger als 200 Hz und/oder bis zu mehr als 500 Hz, insbesondere mehr als 600 Hz, verwendet werden.

Weiter kann ermöglicht werden, dass die Wobbel-Frequenz in einem weiteren Rahmen vom Nutzer vorgegeben werden kann. Auf diese Weise kann beispielsweise gezielt Einfluss auf die Schmelzbaddynamik genommen werden.

Insbesondere kann durch die von einer der Wobbel-Figur entsprechenden, idealen Wobbel-Bewegung abweichenden kompensierten Wobbel-Bewegung eine hohe Figurwiedergabetreue, also eine möglichst gleichbleibende Form und Größe der Wobbel-Bewegung, mit zunehmender Wobbel-Frequenz auch dann erzielt werden, wenn das System, z.B. zur Optimierung des Bauraums und/oder der Scanfeldgröße, aus zwei unterschiedlichen Ablenkeinheiten aufgebaut ist, die unterschiedlich trägheitsbehaftet sind.

Durch Vorsehen unterschiedlicher kompensierter Wobbel-Bewegungen für unterschiedliche Wobbel-Frequenzen kann beispielsweise die Steuerung der Ablenkeinheit für die jeweilige Wobbel-Frequenz kalibriert werden, um mit der tatsächlichen Wobbel-Bewegung der gewünschten Wobbel-Figur möglichst nahe zu kommen. Dies kann beispielsweise erfolgen, indem für zumindest eine zu verwendende Wobbel-Figur und für bestimmte Wobbel-Frequenzen kompensierte Wobbel-Bewegungen bzw. entsprechende Steuerwerte experimentell jeweils derart bestimmt werden, dass Figur und Amplitude der Wobbel-Bewegung für alle untersuchten Frequenzen annähernd gleichbleiben. Steuerwerte bzw. -daten (z.B. Steuergrößen) für die kompensierten Wobbel-Bewegungen können beispielsweise in einer Software für die Steuerung der Ablenkeinrichtung hinterlegt werden und entsprechend im Prozess verwendet werden. Des Weiteren können die Steuerwerte für die jeweilige kompensierte Wobbel-Bewegung, z.B. Steuergrößen für das Vorhalten der Amplituden, mit Hilfe eines geeigneten Algorithmus oder alternativer automatisierbarer Verfahren, wie beispielsweise aus dem Bereich der "Künstlichen Intelligenz", gewonnen werden.

Eine experimentelle Bestimmung einer kompensierten Wobbel-Bewegung für eine Wobbel-Frequenz kann beispielsweise durch das folgende Verfahren erfolgen: Ein Laser (Pilotlaser) bearbeitet ein Medium, beispielsweise ein Blatt Papier, gemäß einer vorgegebenen Wobbel-Bewegung. Optional kann eine Kamera die Bearbeitungsspur aufnehmen, beispielsweise von der Rückseite des Mediums. Der Bearbeitungsschritt wird für verschiedene Wobbel-Frequenzen und/oder Wobbel-Figuren wiederholt, wobei die Steuerwerte- bzw. daten (Steuergrößen) für die kompensierte Wobbel-Bewegung variiert werden. Die Steuerwerte für die kompensierte Wobbel-Bewegung werden variiert, bis das erhaltene Ergebnis (die Bearbeitungsspur) zu der vorgegebenen Wobbel-Figur passt.

So erzeugte Wobbel-Figuren können an Stützstellen vermessen werden, und es können weitere Steuergrößen zwischen den Stützstellen interpoliert werden.

Steuerwerte zum Steuern der Ablenkeinheit gemäß einer kompensierten Wobbel-Bewegung können beispielsweise Steuergrößen zum Steuern der Ablenkeinheit umfassen, insbesondere eine Sequenz von Steuergrößen. Eine Steuergröße kann beispielsweise eine Amplitude zum Steuern einer Ablenkung in eine erste Richtung umfassen. Eine Steuergröße kann beispielsweise eine Amplitude zum Steuern einer Ablenkung in eine erste Richtung und eine Amplitude zum Steuern einer Ablenkung in eine zweite Richtung umfassen oder definieren. Die zweite Richtung kann quer bzw. senkrecht zur ersten Richtung sein. Im Falle eines Ablenkungs- oder Scanner-Spiegels kann die betreffende Amplitude zum Steuern der Ablenkung eine (Soll-)Auslenkung des Spiegels angeben.

Die Steuergröße kann einen Ort oder Ortsvektor umfassen, der eine Position in einem Bewegungspfad der kompensierten Wobbel-Bewegung angibt. Der Ort kann wenigstens eine Koordinate für eine Ablenkungsposition des Laserstrahls angeben. Der Ortsvektor kann relativ zu einem vorangehenden Ortsvektor in einer Sequenz von Steuergrößen angegeben sein. Die Sequenz von Steuergrößen kann beispielsweise für eine Sequenz von Stützpunkten eines der kompensierten Wobbel-Bewegung entsprechenden Bewegungspfades angegeben sein. Durch eine Steuergröße oder durch eine Differenz aufeinanderfolgender Steuergrößen in der Sequenz von Steuergrößen kann ein Segment der kompensierten Wobbel-Bewegung definiert sein, beispielsweise als Ortsvektor. Die Anzahl von Stützstellen oder die Länge der Sequenz von Steuergrößen kann beispielsweise in einem Bereich bis zu 32 oder mehr, vorzugweise in einem Bereich bis zu 64 oder mehr, besonders bevorzugt in einem Bereich bis zu 128 oder mehr liegen.

Die Steuergrößen können für feste Zeiten, z.B. feste Zeitintervalle oder Zeitpunkte, definiert sein, beispielsweise entsprechend einer Periodendauer der Wobbel-Bewegung, dividiert durch eine Länge der Sequenz der Steuergrößen (Anzahl der Elemente der Sequenz). Beispielsweise kann sich aus einer Mindestgröße von Zeitsegmenten (zeitlichen Abständen aufeinanderfolgender Steuergrößen) und einer beispielsweise durch einen Benutzer vorgegebenen Bahngeschwindigkeit entlang der Wobbel-Bewegungsbahn eine maximal mögliche Anzahl von Stützstellen über eine vorgegebene Bahn ergeben. Eine Bahngeschwindigkeit kann beispielsweise wenigstens 1 m/s betragen. Zeitsegmente können beispielsweise in einem Bereich bis hinunter zu 10µs oder weniger liegen.

Die Segmente können zeitlich äquidistant ausgelegt sein. Alternativ kann in der Sequenz von Steuergrößen eine Steuergröße zusätzlich einen Zeitpunkt, bezogen auf einen Referenzzeitpunkt der kompensierten Wobbel-Bewegung, oder eine Bahngeschwindigkeit umfassen, beispielsweise eine Bahngeschwindigkeit, die einem jeweiligen Segment zugeordnet ist. Eine Bahngeschwindigkeit der Wobbel-Bewegung kann sich aus einer vorgegebenen zeitlichen Abfolge der Steuergrößen ergeben. Beispielsweise kann eine momentane Soll-Bahngeschwindigkeit der Wobbel-Bewegung sich aus dem aktuell zurückzulegenden Ortsvektor und einer zugehörigen Zeit ergeben, wobei die Zeit ein festes Zeitintervall sein kann. Die (tatsächliche) Bahngeschwindigkeit der Wobbel-Bewegung kann von der Soll-Bahngeschwindigkeit abweichen. Als Bahngeschwindigkeit wird hier der Betrag der Bahngeschwindigkeit in der Wobbel-bewegung des Laserstrahls verstanden, also eine richtungslose Größe.

Die kompensierte Wobbel-Bewegung kann bei einer größeren Wobbel-Frequenz zumindest in einer Bewegungsrichtung einen größeren Steuerwert für eine Auslenkung des Laserstrahls umfassen. Dadurch kann beispielsweise einer Trägheit, z.B. eines Scannerspiegels, bei der Auslenkung Rechnung getragen werden.

Die Steuerwerte gemäß der kompensierten Wobbel-Bewegung können in Abhängigkeit von der Wobbel-Frequenz durch wenigstens eine übersteuerte Amplitude von Steuerwerten, die der Wobbel-Figur bei einer geringeren Wobbel-Frequenz entsprechen, abweichen. Die Amplitude kann einen Teil der Wobbel-Figur oder einen Bewegungsabschnitt der Wobbel-Bewegung betreffen. Die Übersteuerung bzw. Zusatzamplitude kann mit zunehmender Wobbel-Frequenz zunehmen. Unter einer Amplitude (oder Bewegungsamplitude) wird hier ein Maß einer Veränderung der Wobbel-Position in einer einzelnen Periode der (kompensierten) Wobbel-Bewegung verstanden, beispielsweise eine maximale Auslenkung der Wobbel-Position aus einer mittleren Position der Wobbel-Figur.

In Ausführungsformen kann das System zur Materialbearbeitung mittels Laserstrahl ferner aufweisen: eine Steuereinheit zum Ausgeben von elektrischen Steuersignalen an die Ablenkeinheit, basierend auf Steuerwerten für eine kompensierte Wobbel-Bewegung, wobei die Wobbel-Einheit dazu eingerichtet ist, zum Steuern der Ablenkeinheit durch die Steuereinheit die Steuerwerte für die jeweilige kompensierte Wobbel-Bewegung an die Steuereinheit auszugeben.

Das System zur Materialbearbeitung mittels Laserstrahl kann eine Prozessstrahlführungseinheit zum Führen des Laserstrahls relativ zu einem Werkstück gemäß dem Bearbeitungspfad umfassen.

Die Wobbel-Einheit kann beispielsweise als Programmeinheit, z.B. als Software oder Computer-Programm, implementiert sein. Die Wobbel-Einheit kann Teil der Steuereinheit sein. Die Steuereinheit kann beispielsweise zum Ausführen der Funktion der Wobbel-Einheit ausgebildet sein.

Die zu verwendende Wobbel-Figur kann beispielsweise eine vorgegebene Wobbel-Figur sein oder eine auswählbare, beispielsweise Nutzer-wählbare, Wobbel-Figur sein.

Die Materialbearbeitung mittels Laserstrahl kann beispielsweise ein Laserschweißen, Laser-Metal-Deposition, 3D-Druck, Laserschneiden oder -löten umfassen.

Entsperechend der Erfindung umfasst das Steuern der Ablenkeinheit gemäß der kompensierten Wobbel-Bewegung zumindest eines von: Kompensieren einer Amplitudenverringerung zumindest eines Abschnitts der Wobbel-Figur, insbesondere in Abhängigkeit von der Wobbel-Frequenz; und Kompensieren einer Formabweichung zumindest eines Abschnitts der Wobbel-Figur, insbesondere in Abhängigkeit von der Wobbel-Frequenz. Bei zunehmender Wobbel-Frequenz kann beispielsweise ohne die Kompensation ein Figurwiedergabefehler in Form einer verringerten Amplitude (Ausdehnung) eines Abschnitts der Wobbel-Figur auftreten, und/oder ein Figurwiedergabefehler in Form einer Abweichung von der (Gesamt-)Form der Wobbel-Figur. Durch die (Vor-)Kompensation kann eine weitgehende Einhaltung der Figur und Amplitude auch bei steigenden Wobbel-Frequenzen ermöglicht werden.

In einigen Ausführungsformen entspricht die verwendete kompensierte Wobbel-Bewegung der in Abhängigkeit von der Wobbel-Frequenz um einen Faktor skalierten Wobbel-Figur. Beispielsweise können die Steuerwerte für eine Auslenkung des Laserstrahls entlang der Wobbel-Figur mit einem von der Wobbel-Frequenz abhängigen Faktor skaliert sein. Der Faktor kann als Skalierungsfaktor oder Streckungsfaktor bezeichnet werden. Der Faktor kann zwei Komponenten umfassen, entsprechend einer individuell definierten Skalierung in einer ersten und einer zweiten Richtung, wie z.B. x und y. Der Faktor kann in Abhängigkeit von der Wobbel-Frequenz unterschiedliche Werte annehmen. Vorzugsweise sind mehrere unterschiedliche kompensierte Wobbel-Bewegungen für unterschiedliche Wobbel-Frequenzen und/oder für unterschiedliche Wobbel-Figuren vorgesehen, wobei die Absolutbeträge des Faktors oder von dessen Komponenten jeweils mit zunehmender Wobbel-Frequenz ansteigen. Bei einer niedrigen Frequenz eines vorgesehenen Bereichs von Wobbel-Frequenzen kann der Faktor beispielsweise gleich 1 sein, oder jede seiner Komponenten kann gleich 1 sein.

In Ausführungsformen kann in einem Speicher und/oder in einer Tabelle für verschiedene Wobbel-Frequenzen jeweils Steuerwerte für eine Auslenkung des Laserstrahls entlang der Wobbel-Figur abgelegt sein.

Die kompensierte Wobbel-Bewegung kann beispielsweise eine Bahngeschwindigkeit in Abhängigkeit von einer Position in der Wobbel-Figur definieren oder festlegen. Somit kann die Vorkompensation so durchgeführt werden, dass sich die Konturtreue bzw. Figurtreue erhöht, die Bahngeschwindigkeit an kritischen Stellen der Figur jedoch beispielsweise in definierten Grenzen von einer Vorgabe abweichen darf. Hierzu kann beispielsweise in einigen Abschnitten (z.B. Bereichen oder Segmenten der Figur) eine Bahngeschwindigkeitsvorgabe zunächst in gewissen Grenzen solange variiert werden, bis eine gemessene Figur möglichst gut mit der gewünschten Figur übereinstimmt. Diese so experimentell ermittelten Variationen der Bahngeschwindigkeit können anschließend entsprechend in der Steuerung (d.h., in der Wobbel-Einheit) hinterlegt und bei der jeweiligen Wobbel-Figur und Wobbel-Frequenz angewendet werden. Insbesondere können entsprechende Steuerwerte bzw. -daten für die jeweilige kompensierte Wobbel-Bewegung gespeichert werden. Beispielsweise kann die variierende Bahngeschwindigkeit zumindest an einer Position der Wobbel-Figur eine für die Wobbel-Figur und die betreffende Wobbel-Frequenz vorgegebene Bahngeschwindigkeit übersteigen. Beispielsweise kann die variierende Bahngeschwindigkeit zumindest für eine Wobbel-Frequenz an zumindest einer Position der Wobbel-Figur ein Folgevermögen der Ablenkeinheit übersteigen.

Die Ablenkeinheit kann eine erste Ablenkeinheit und eine zweite Ablenkeinheit zur Ablenkung des Laserstrahls in jeweilige, unterschiedliche Richtungen umfassen, beispielsweise die genannte erste Richtung und zweite Richtung. Die Ablenkung in einer zweiten Richtung kann unabhängig von einer Ablenkung in einer ersten Richtung erfolgen und steuerbar sein. Die Ablenkeinheit kann eine 2D-Ablenkeinheit sein, beispielsweise ein 2D-Scansystem. Die zweite Richtung kann um 90° gegenüber der ersten Richtung versetzt sein oder um einen von 90° abweichenden Winkel gegenüber der ersten Richtung versetzt sein. Die erste Ablenkeinheit und die zweite Ablenkeinheit können beispielsweise eine erste Scannereinheit und eine zweite Scannereinheit umfassen.

Die Ablenkeinheit kann wenigstens einen Spiegel umfassen. Die Ablenkeinheit kann eine Antriebseinheit umfassen, beispielsweise einen Galvanometer-Antrieb oder einen Piezo-Antrieb. Die Ablenkeinheit kann wenigstens eine Antriebseinheit für einen jeweiligen Spiegel umfassen. Beispielsweise kann die erste Ablenkeinheit eine Antriebseinheit und einen Spiegel umfassen, und die zweite Ablenkeinheit kann eine Antriebseinheit und einen Spiegel umfassen. Die jeweilige Antriebseinheit kann beispielsweise einen Galvanometer-Antrieb oder einen Piezo-Antrieb umfassen. Beispielsweise kann durch die jeweiligen Ablenkeinheiten eine Ablenkung in einer X-Richtung (z.B. als erste Richtung) und, unabhängig davon, in einer Y-Richtung (z.B. als zweite Richtung) erfolgen.

Die Ablenkeinheit kann wenigstens einen Galvanometer-Spiegel, umfassen. Beispielsweise kann die erste Ablenkeinheit einen ersten (Galvanometer-)Spiegel umfassen, und die zweite Ablenkeinheit kann einen zweiten (Galvanometer-)Spiegel umfassen. Drehachsen der (Galvanometer-)Spiegel können rechtwinklig zueinander angeordnet sein oder unter einem von 90° abweichenden Winkel. Beispielsweise kann durch die jeweiligen Ablenkeinheiten eine Ablenkung in einer X-Richtung (z.B. als erste Richtung) und, unabhängig davon, in einer Y-Richtung (z.B. als zweite Richtung) erfolgen. Eine Ablenkeinheit mit Galvanometer-Spiegel kann auch als Galvanometer-Scanner bezeichnet werden. Galvanometer-Spiegel arbeiten nach dem Galvanometerprinzip, bei dem der Spiegel einem angelegten Strom bzw. elektrischen Feld folgt. Obwohl die Ausführungsform in Bezug auf Galvanometer-Spiegel beschrieben ist, ist sie nicht darauf beschränkt und die Ablenkeinheit kann auch eine piezobasierte Antriebseinheit umfassen.

In Ausführungsformen kann die Ablenkeinheit eine erste Ablenkeinheit und eine zweite Ablenkeinheit umfassen, wobei die erste Ablenkseinheit zur Ablenkung des Laserstrahls in eine erste Richtung eingerichtet ist, und die zweite Ablenkeinheit zur Ablenkung des Laserstrahls in eine zweite Richtung eingerichtet ist. Die erste Richtung kann sich von der zweiten Richtung unterscheiden bzw. die erste und zweite Richtung können senkrecht aufeinander stehen, d.h. bilden zwei Achsen eines kartesischen Koordinatensystems. Dabei können die erste Ablenkeinheit und die zweite Ablenkeinheit im Wesentlichen gleiche dynamische Eigenschaften aufweisen. Beispielsweise können die erste Ablenkeinheit und die zweite Ablenkeinheit im Wesentlichen gleiche Trägheit und/oder im Wesentlichen gleiche Steifigkeit aufweisen. Dies vereinfacht die Ausführung einer Figur-treuen Wobbel-Bewegung. Die erste Ablenkeinheit und die zweite Ablenkeinheit können im Wesentlichen gleiche bewegliche Teile aufweisen bzw. daraus bestehen, d.h. identisch aufgebaut sein. Insbesondere können die erste Ablenkeinheit und die zweite Ablenkeinheit jeweils einen Spiegel derselben Größe und/oder jeweils eine Antriebseinheit derselben Art aufweisen. Dies kann eine im Wesentlichen gleiche Dynamik der beiden Ablenkeinheiten bewirken.

Die Figurtreue kann durch einen möglichst symmetrischen Aufbau der Ablenkeinheit, z.B. eines 2D-Scansystems, verbessert werden. Hierzu kann die Ablenkeinheit aus zwei identischen Ablenkeinheiten aufgebaut werden, so dass deren mechanische Charakteristik weitgehend identisch ist. Alternativ ist es auch möglich, die beiden Ablenkeinheiten unterschiedlich aufzubauen, aber hierbei darauf zu achten, dass deren Eigenschaften bzgl. Trägheit und Steifigkeit weitgehend identisch sind und sie somit die gleichen dynamischen Eigenschaften aufweisen.

Zusätzlich kann die Konturtreue dadurch verbessert werden, dass die beiden (z.B. identischen) Ablenkeinheiten im 90°-Winkel zueinander angeordnet werden. Ein solcher Aufbau ist bzgl. der Konturtreue optimal. Dementsprechend können die erste Richtung und die zweite Richtung um 90° zueinander orientiert sein.

In Ausführungsformen kann die Wobbel-Einheit weiter dazu eingerichtet sein, beim Steuern der Ablenkeinheit gemäß der kompensierten Wobbel-Bewegung eine Leistungsmodulation des Laserstrahls in Abhängigkeit von einer Position in der Wobbel-Figur zu steuern. Eine Leistungsmodulation des Lasers kann besonders vorteilhafte Eigenschaften der Wobbel-Bewegung bewirken, indem der Energieeintrag noch gezielter räumlich festgelegt werden kann. Sowohl durch die Wobbel-Bewegung als auch zusätzlich durch die Leistungsmodulation kann der Energieeintrag in der Ausdehnung des aktuellen Bearbeitungspunktes während dessen Bewegung entlang der primären Bahnstrecke (dem Bearbeitungspfad) gesteuert werden. Das System kann beispielsweise eine Modulationseinheit zum Modulieren der Leistung des Laserstrahls aufweisen, und die Wobbel-Einheit kann zum Steuern einer Leistungsmodulation des Laserstrahls in Abhängigkeit von einer Position in der Wobbel-Figur durch Ansteuern der Modulationseinheit eingerichtet sein. Diese Abhängigkeit kann durch einen festen zeitlichen Verlauf der kompensierten Wobbel-Bewegung gegeben sein.

Gemäß einem weiteren Aspekt der vorliegenden Offenbarung ist ein Verfahren zur Materialbearbeitung mittels Laserstrahl angegeben, umfassend: Überlagern einer einem Bearbeitungspfad entsprechenden Vorschubbewegung des Laserstrahls mit einer Wobbel-Bewegung des Laserstrahls entsprechend einer Wobbel-Figur und einer Wobbel-Frequenz durch Auslenken des Laserstrahls mittels einer Ablenkeinheit, wobei zum Ausführen der Wobbel-Bewegung die Ablenkeinheit gemäß einer kompensierten Wobbel-Bewegung gesteuert wird, bei der Steuerwerte für eine Auslenkung des Laserstrahls entlang der Wobbel-Figur in Abhängigkeit von der Wobbel-Frequenz angepasst sind und/oder eine entlang der Wobbel-Figur variierende Bahngeschwindigkeit der Wobbel-Bewegung in Abhängigkeit von einer Position des Laserstrahls in der Wobbel-Figur und von der Wobbel-Frequenz angepasst ist.

In einem vorausgehenden Kalibrierschritt können die Steuerwerte für eine Auslenkung des Laserstrahls für eine Vielzahl von Wobbel-Frequenzen so bestimmt werden, dass beim Steuern der Ablenkeinheit entsprechend der Steuerwerte eine Auslenkung des Laserstrahls der gewünschten Wobbel-Bewegung, insbesondere der gewünschten Wobbel-Figur, entspricht. In einem vorausgehenden Kalibrierschritt kann auch jeweils eine entlang der Wobbel-Figur variierende Bahngeschwindigkeit der Wobbel-Bewegung für eine Vielzahl von Wobbel-Frequenzen so bestimmt werden, dass beim Ausführen der Wobbel-Bewegung mit der für die entsprechende Wobbel-Frequenz bestimmten Bahngeschwindigkeit ein Figurwiedergabefehler reduziert wird. Mit anderen Worten können für bestimmte Wobbel-Figuren und/oder Wobbel-Frequenzen die Steuerwerte bzw. -größen experimentell jeweils derart bestimmt werden, dass die Wobbel-Figur bzw. die Form der Wobbel-Bewegung für alle untersuchten Wobbel-Frequenzen gleichbleiben. Diese Steuerwerte können schließlich in der Wobbel-Einheit für die Ansteuerung der Ablenkeinheit hinterlegt und entsprechend im Verfahren verwendet werden. Ebenso können für bestimmte Wobbel-Figuren und/oder Wobbel-Frequenzen Bahngeschwindigkeiten entlang der Wobbel-Figur solange variiert werden, bis die resultierende Wobbel-Figur möglichst gut mit der gewünschten Wobbel-Figur übereinstimmt. Diese so ermittelten entlang der Wobbel-Figur variierende Bahngeschwindigkeiten können anschließend in der Wobbel-Einheit für die Ansteuerung der Ablenkeinheit hinterlegt und im Verfahren angewendet werden.

Das Verfahren kann ein Betriebsverfahren für ein System zur Materialbearbeitung mittels Laserstrahl wie es weiter oben beschrieben ist und/oder wie in den Ansprüchen angegeben sein.

### Kurzbeschreibung der Zeichnungen

Die Erfindung wird im Folgenden anhand von Figuren im Detail beschrieben. In den Figuren zeigt
- Fig. 1: eine schematische Darstellung eines Systems zur Materialbearbeitung mittels Laserstrahl gemäß Ausführungsformen der vorliegenden Offenbarung;
- Fig. 2: eine schematische Darstellung der Änderung einer Wobbel-Figur in Abhängigkeit von einer Wobbel-Frequenz bei ansonsten gleichen Steuerwerten von Ablenkeinheiten eines Systems zur Materialbearbeitung mittels Laserstrahl;
- Fig. 3: eine schematische Darstellung einer Wobbel-Figur in Abhängigkeit von einer Wobbel-Frequenz bei einem System zur Materialbearbeitung gemäß Ausführungsformen der vorliegenden Offenbarung; und
- Fig. 4: eine schematische Darstellung einer Ablenkeinheit in Form eines symmetrisch aufgebauten 2D-Scanners eines Systems zur Materialbearbeitung gemäß Ausführungsformen der vorliegenden Offenbarung.

### Detaillierte Beschreibung der Zeichnungen

Im Folgenden werden, sofern nicht anders vermerkt, für gleiche und gleichwirkende Elemente dieselben Bezugszeichen verwendet.

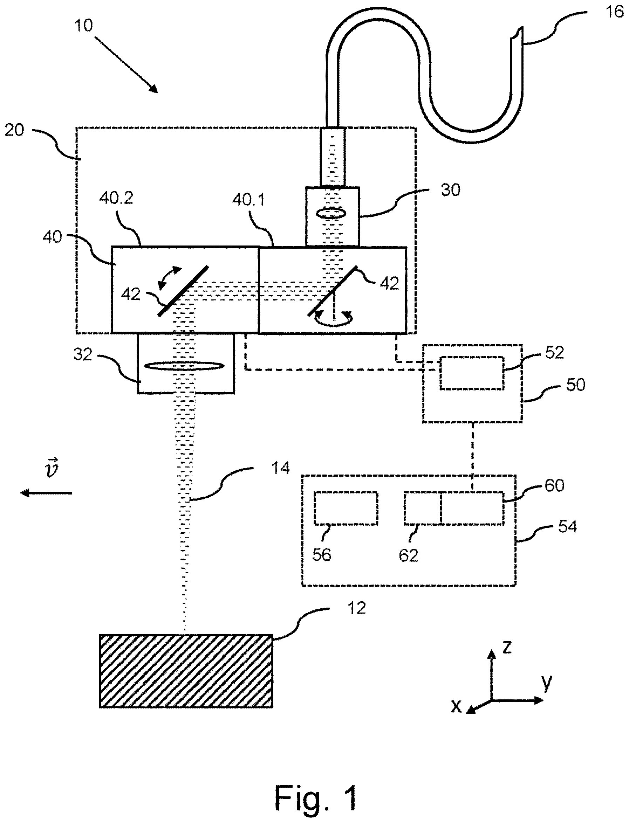

Fig. 1 zeigt eine schematische Darstellung eines Systems zur Materialbearbeitung mittels Laserstrahl gemäß Ausführungsformen der vorliegenden Offenbarung. Das System umfasst einen Laserbearbeitungskopf 10 mit einer Prozessstrahlführungseinheit 20 zum Führen eines Laserstrahls 14 relativ zu einem Werkstück 12. Der Laserkopf hat beispielsweise ein Vorschubgeschwindigkeit v̅ in Bezug auf das Werkstück 12.

Der Laserbearbeitungskopf 10 ist eingerichtet, um einen von einer Laserlichtquelle oder einem Ende einer Laserleitfaser 16 austretenden Laserstrahl 14 mit Hilfe einer Kollimations- und Fokussieroptik 30, 32 auf ein zu bearbeitendes Werkstück 12 zu fokussieren oder zu bündeln, um dadurch eine Bearbeitung oder einen Bearbeitungsprozess auszuführen. Die Bearbeitung kann beispielsweise ein Laserschneiden, -löten oder -schweißen umfassen.

Der Laserbearbeitungskopf 10 umfasst eine Ablenkeinheit 40 in Form eines Scanner-Moduls, etwa einen 2D-Scanner, zum Auslenken des Laserstrahls 14 und zum Positionieren des Bearbeitungspunkts des Laserstrahls 14 in x-Richtung und y-Richtung.

Die Ablenkeinheit 40 umfasst eine erste Ablenkeinheit 40.1 zum Positionieren des Laserstrahls 14 in x-Richtung und eine zweite Ablenkeinheit 40.2 zum Positionieren des Laserstrahls 14 in y-Richtung. Die Ablenkeinheiten 40.1, 40.2 umfassen in dem gezeigten Beispiel jeweils einen Galvanospiegel 42.

Das System umfasst weiter eine Steuereinheit 50 mit einer Treiberelektronik 52 zum Ausgeben von analogen elektrischen Steuersignalen an die Ablenkeinheiten 40.1, 40.2, um die Galvanospiegel 42 zu steuern. Die Steuersignale haben jeweils eine Amplitude, die eine Bewegung des Betreffenden Galvanospiegels 42 hin zu einer entsprechenden Auslenkung des Galvanospiegels 42 bewirkt.

Das System umfasst weiter einen Steuerrechner 54, in dem eine Wobbel-Einheit 60 implementiert ist. Die Wobbel-Einheit 60 ist dazu eingerichtet, zum Steuern der Ablenkeinheit 40 durch die Steuereinheit 50 Steuerwerte für eine kompensierte Wobbel-Bewegung an die Steuereinheit 50 auszugeben. Der Steuerrechner 54 ist dazu eingerichtet, über die Prozessstrahlführungseinheit 20 eine Relativbewegung des Laserstrahls 14 und des Werkstücks 12 gemäß einem primären Bearbeitungspfad zu steuern. Die Wobbel-Einheit 60 ist dazu eingerichtet, mittels Steuern der Ablenkeinheit 40 über die Steuereinheit 50 der Relativbewegung eine Wobbel-Bewegung des Laserstrahls 14 entsprechend einer Wobbel-Figur und einer Wobbel-Frequenz zu überlagern. Die zu verwendende Wobbel-Figur wird beispielsweise von einem Benutzer ausgewählt und kann beispielsweise eine von einem Kreis, einer Acht oder einer anderen geschlossenen Form sein.

Würde man bei einer vorgegebenen Wobbel-Figur mit zunehmender Wobbel-Frequenz stets eine Wobbel-Bewegung entsprechend einem selben Bewegungspfad bzw. mit denselben Steuerbefehlen verwenden, so würde sich aufgrund von Trägheit der Ablenkeinheiten 40.1, 40.2 bei großer Frequenz die Größe und die Geometrie (Form) der tatsächlich ausgeführten Wobbel-Bewegung ändern und beispielsweise hinsichtlich einer Bewegungsamplitude gegenüber der gewünschten Wobbel-Bewegung zurückbleiben. Fig. 2 zeigt dies schematisch als Vergleichsbeispiel für eine Wobbel-Figur in Form einer liegenden Acht. Dargestellt sind von links nach rechts Wobbel-Bewegungen mit einer Wobbel-Frequenz von 50 Hz, 195 Hz, 390 Hz, 520 Hz und 625 Hz. Es zeigt sich ein Figurwiedergabefehler, der sich durch eine verringerte Bewegungsamplitude in x-Richtung und besonders in y-Richtung äußert, und dadurch auch eine veränderte Geometrie der Figur umfasst.

In Fig. 1 ist die Wobbel-Einheit 60 dazu eingerichtet, ein Vorkompensieren des bei einer zunehmenden Wobbel-Frequenz auftretenden Figurwiedergabefehlers der überlagerten Wobbel-Bewegung auszuführen. Dazu steuert die Wobbel-Einheit 60 die Ablenkeinheit 40 gemäß einer von der Wobbel-Frequenz abhängigen kompensierten Wobbel-Bewegung, die von einer der Wobbel-Figur entsprechenden und die Wobbel-Frequenz nicht berücksichtigenden, generischen Wobbel-Bewegung abweicht.

Fig. 3 zeigt schematisch die sich ergebenden, tatsächlich ausgeführten Wobbel-Bewegungen. In diesem Beispiel werden die kompensierten Wobbel-Bewegungen durch Multiplikation der Steuerwerte für eine Referenz-Wobbel-Bewegung bei 50 Hz mit jeweiligen Streckungsfaktoren für die Bewegungsamplituden erzeugt. Dabei wird jeweils ein x-Streckungsfaktor und ein y-Streckungsfaktor verwendet, die verschieden voneinander sein können.

Dargestellt in Fig. 3 sind von links nach rechts die Wobbel-Bewegungen bei den gleichen Wobbel-Frequenzen wie in Fig. 2, wobei bei der Wobbel-Frequenz von 50 Hz die Streckungsfaktoren (1,0; 1,0) verwendet werden, bei der Wobbel-Frequenz von 195 Hz die Streckungsfaktoren (1,04; 1,09) verwendet werden, bei der Wobbel-Frequenz von 390 Hz die Streckungsfaktoren (1,2; 1,35) verwendet werden, bei der Wobbel-Frequenz von 520 Hz die Streckungsfaktoren (1,3; 2,1) verwendet werden und bei der Wobbel-Frequenz von 625 Hz die Streckungsfaktoren (1,3; 4,0) verwendet werden. Gegenüber Fig. 2 (ohne Vorhalten von Streckungsfaktoren für die Amplituden) ist eine deutliche Verbesserung der Konturtreue zu der vorgegebenen Wobbel-Figur zu erkennen.

Durch das Vorhalten der geänderten Bewegungsamplituden, die in einem Speicher 62 gespeichert sein können, können somit sowohl die in Fig. 2 gezeigten Amplitudenverringerungen als auch die damit verbundene Formabweichung vorkompensiert werden. Aufgrund der um die Streckungsfaktoren übersteuerten Amplituden der Steuergrößen für die Steuereinheit 50 entspricht die tatsächliche Wobbel-Bewegung der gewünschten Wobbel-Bewegung, da die Ansteuerung der Ablenkeinheit 40 auf der kompensierten Wobbel-Bewegung basiert. Dabei können sich dem Betrag nach variierende Bahngeschwindigkeiten im Verlauf der Wobbel-Bewegung ergeben.

In Fig. 1 kann der Steuerrechner 54 weiter dazu eingerichtet sein, über ein Leistungsmodul 56 eine Leistungsmodulation des Laserstrahls 14 in Abhängigkeit von einer Position in der Wobbel-Figur zu steuern. Das Leistungsmodul 58 kann dazu beispielsweise die Laserlichtquelle ansteuern.

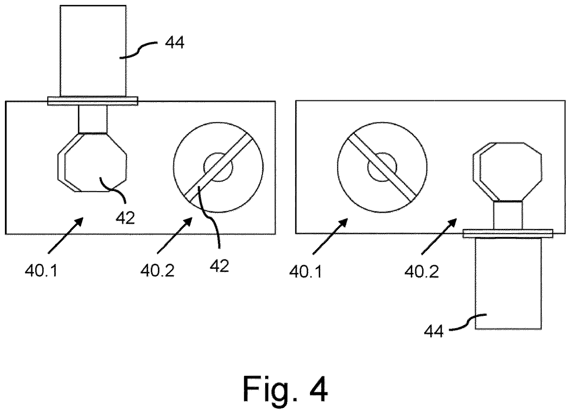

Während im Beispiel der Fig. 3 die Ablenkeinheiten 40.1 und 40.2 beispielsweise unterschiedlich große Spiegel 42 haben, so dass unterschiedlich große Abweichungen der Bewegungsamplituden in x- und y-Richtung erforderlich sind, zeigt Fig. 4 beispielhaft in zwei Ansichten eine symmetrisch aufgebaute Ablenkeinheit 40 einer weiteren Ausführungsform eines Systems zur Materialbearbeitung mittels Laserstrahl. Die Ablenkeinheit 40 der Fig. 4 hat zwei symmetrisch aufgebaute erste und zweite Ablenkeinheiten 40.1, 40.2, die insbesondere gleich große Spiegel 42 und gleichartige Galvanometer-Antriebseinheiten 44 für die Spiegel 42 aufweisen. Durch den gleichen Aufbau und die resultierende gleiche Dynamik der beiden Ablenkeinheiten 40.1 und 40.2 kann eine Formabweichung der Wobbel-Bewegung noch besser vorkompensiert werden. Im Übrigen kann das System ähnlich dem System der Fig. 1 aufgebaut sein.

In den beschriebenen Beispielen können die Stellwinkel der Ablenkeinheiten beispielsweise ca. 1°-2° betragen, bei Auslenkungen des Laserstrahls beispielsweise im Bereich von 10 mm bis 20 mm. Für eine Wobbel-Bewegung mit z.B. einer Amplitude im Bereich von 1 mm bis 2 mm ergeben sich somit Auslenkwinkel zum Wobbeln von ca. 5-10 Bogenminuten.

## Patentansprüche

1. System zur Materialbearbeitung mittels Laserstrahl, aufweisend:
eine Ablenkeinheit (40) zum Auslenken des Laserstrahls (14); und
eine Wobbel-Einheit (60), die dazu eingerichtet ist, einer einem Bearbeitungspfad entsprechenden Vorschubbewegung des Laserstrahls (14) durch Steuern der Ablenkeinheit (40) eine Wobbel-Bewegung des Laserstrahls (14) mit einer Wobbel-Figur und einer Wobbel-Frequenz zu überlagern,
**dadurch gekennzeichnet, dass**
die Wobbel-Einheit (60) dazu eingerichtet ist, zum Ausführen der Wobbel-Bewegung die Ablenkeinheit (40) gemäß einer kompensierten Wobbel-Bewegung zu steuern, bei der Steuerwerte für eine Auslenkung des Laserstrahls (14) entlang der Wobbel-Figur in Abhängigkeit von der Wobbel-Frequenz angepasst und hinterlegt sind und zum Steuern der Ablenkeinheit (40) gemäß der kompensierten Wobbel-Bewegung verwendet werden und/oder bei der eine entlang der Wobbel-Figur variierende Bahngeschwindigkeit der Wobbel-Bewegung in Abhängigkeit von einer Position des Laserstrahls (14) in der Wobbel-Figur und von der Wobbel-Frequenz angepasst und hinterlegt ist und zum Steuern der Ablenkeinheit (40) gemäß der kompensierten Wobbel-Bewegung angewendet wird,
und, dass das Steuern der Ablenkeinheit (40) gemäß der kompensierten Wobbel-Bewegung zumindest eines umfasst von: Kompensieren einer Amplitudenverringerung zumindest eines Abschnitts der Wobbel-Figur in Abhängigkeit von der Wobbel-Frequenz; und Kompensieren einer Formabweichung zumindest eines Abschnitts der Wobbel-Figur in Abhängigkeit von der Wobbel-Frequenz.

2. System nach Anspruch 1, wobei die Steuerwerte für eine Auslenkung des Laserstrahls (14) entlang der Wobbel-Figur mit einem von der Wobbel-Frequenz abhängigen Faktor skaliert sind.

3. System nach einem der vorstehenden Ansprüche, wobei in einem Speicher und/oder in einer Tabelle für verschiedene Wobbel-Frequenzen jeweils Steuerwerte für eine Auslenkung des Laserstrahls (14) entlang der Wobbel-Figur abgelegt sind.

4. System nach einem der vorstehenden Ansprüche, bei dem die Ablenkeinheit (40) eine erste Ablenkeinheit (40.1) und eine zweite Ablenkeinheit (40.2) umfasst, wobei die erste Ablenkeinheit (40.1) zur Ablenkung des Laserstrahls (14) in eine erste Richtung (x) eingerichtet ist, die zweite Ablenkeinheit (40.2) zur Ablenkung des Laserstrahls (14) in eine zweite Richtung (y) eingerichtet ist, und wobei die erste Ablenkeinheit (40.1) und die zweite Ablenkeinheit (40.2) im Wesentlichen gleiche dynamische Eigenschaften aufweisen.

5. System nach einem der Ansprüche 1 bis 3, bei dem die Ablenkeinheit (40) eine erste Ablenkeinheit (40.1) und eine zweite Ablenkeinheit (40.2) umfasst, wobei die erste Ablenkeinheit (40.1) zur Ablenkung des Laserstrahls (14) in eine erste Richtung (x) eingerichtet ist, die zweite Ablenkeinheit (40.2) zur Ablenkung des Laserstrahls (14) in eine zweite Richtung (y) eingerichtet ist, und wobei die erste Ablenkeinheit (40.1) und die zweite Ablenkeinheit (40.2) im Wesentlichen identisch aufgebaut sind.

6. System nach einem der Ansprüche 1 bis 3, bei dem die Ablenkeinheit (40) eine erste Ablenkeinheit (40.1) und eine zweite Ablenkeinheit (40.2) umfasst, wobei die erste Ablenkeinheit (40.1) zur Ablenkung des Laserstrahls (14) in eine erste Richtung (x) eingerichtet ist, die zweite Ablenkeinheit (40.2) zur Ablenkung des Laserstrahls (14) in eine zweite Richtung (y) eingerichtet ist, und wobei die erste Ablenkeinheit (40.1) und die zweite Ablenkeinheit (40.2) in einem 90° Winkel zueinander angeordnet sind.

7. System nach einem der vorstehenden Ansprüche, bei dem die Wobbel-Einheit (60) dazu eingerichtet ist, eine Leistungsmodulation des Laserstrahls (14) in Abhängigkeit von einer Position des Laserstrahls (14) in der Wobbel-Figur zu steuern.

8. Verfahren zur Materialbearbeitung mittels Laserstrahl, umfassend:
Überlagern einer einem Bearbeitungspfad entsprechenden Vorschubbewegung des Laserstrahls (14) mit einer Wobbel-Bewegung des Laserstrahls (14) entsprechend einer Wobbel-Figur und einer Wobbel-Frequenz durch Auslenken des Laserstrahls (14) mittels einer Ablenkeinheit (40),
**dadurch gekennzeichnet, dass** zum Ausführen der Wobbel-Bewegung die Ablenkeinheit (40) gemäß einer kompensierten Wobbel-Bewegung gesteuert wird, bei der Steuerwerte für eine Auslenkung des Laserstrahls (14) entlang der Wobbel-Figur in Abhängigkeit von der Wobbel-Frequenz angepasst und hinterlegt sind und zum Steuern der Ablenkeinheit (40) gemäß der kompensierten Wobbel-Bewegung verwendet werden und/oder eine entlang der Wobbel-Figur variierende Bahngeschwindigkeit der Wobbel-Bewegung in Abhängigkeit von einer Position des Laserstrahls (14) in der Wobbel-Figur und von der Wobbel-Frequenz angepasst und hinterlegt ist und zum Steuern der Ablenkeinheit (40) gemäß der kompensierten Wobbel-Bewegung angewendet wird,
wobei das Steuern der Ablenkeinheit (40) gemäß der kompensierten Wobbel-Bewegung zumindest eines umfasst von: Kompensieren einer Amplitudenverringerung zumindest eines Abschnitts der Wobbel-Figur in Abhängigkeit von der Wobbel-Frequenz; und Kompensieren einer Formabweichung zumindest eines Abschnitts der Wobbel-Figur in Abhängigkeit von der Wobbel-Frequenz.

9. Verfahren nach Anspruch 8, wobei in einem vorausgehenden Kalibrierschritt Steuerwerte für eine Auslenkung des Laserstrahls (14) für eine Vielzahl von Wobbel-Frequenzen so bestimmt werden, dass beim Steuern der Ablenkeinheit entsprechend der Steuerwerte eine Auslenkung des Laserstrahls (14) der gewünschten Wobbel-Bewegung, insbesondere der gewünschten Wobbel-Figur, entspricht, und/oder
wobei in einem vorausgehenden Kalibrierschritt jeweils eine entlang der Wobbel-Figur variierende Bahngeschwindigkeit der Wobbel-Bewegung für eine Vielzahl von Wobbel-Frequenzen so bestimmt wird, dass beim Ausführen der Wobbel-Bewegung mit der für die entsprechende Wobbel-Frequenz bestimmten variierenden Bahngeschwindigkeit ein Figurwiedergabefehler reduziert wird.

## Claims

1. A system for machining materials by means of laser beam, comprising:
a deflection device (40) for deflecting the laser beam (14); and
a wobble device (60) configured to superimpose a wobble movement of said laser beam (14) with a wobble figure and a wobble frequency onto a feed movement of said laser beam (14) corresponding to a machining path by controlling said deflection device (40),
**characterized in that**
said wobble device (60) is configured, for carrying out the wobble movement, to control said deflection device (40) according to a compensated wobble movement, wherein control values for a deflection of said laser beam (14) along the wobble figure are adapted and stored depending on the wobble frequency, and are used for controlling said deflection device (40) according to the compensated wobble moment, and/or wherein a path speed of the wobble movement that varies along the wobble figure, is adapted and stored depending on a position of said laser beam (14) in the wobble figure and on the wobble frequency, and is used for controlling the deflection device (40 according to the compensated wobble movement,
and **in that** controlling said deflection device (40) according to the compensated wobble movement comprises at least one of: compensating for a reduction in amplitude of at least a portion of the wobble figure depending on the wobble frequency; and compensating for a shape deviation of at least a portion of the wobble figure depending on the wobble frequency.

2. The system according to claim 1, wherein the control values for a deflection of said laser beam (14) along the wobble figure are scaled with a factor dependent on the wobble frequency.

3. The system according to one of the preceding claims, wherein control values for a deflection of said laser beam (14) along the wobble figure are stored in a memory and/or in a table for different wobble frequencies, respectively.

4. The system according to one of the preceding claims, wherein said deflection device (40) comprises a first deflection device (40.1) and a second deflection device (40.2), wherein said first deflection device (40.1) is configured to deflect said laser beam (14) in a first direction (x), said second deflection device (40.2) is configured to deflect said laser beam (14) in a second direction (y), and wherein said first deflection device (40.1) and said second deflection device (40.2) have substantially the same dynamic characteristics.

5. The system according to one of claims 1 to 3, wherein said deflection device (40) comprises a first deflection device (40.1) and a second deflection device (40.2), wherein said first deflection device (40.1) is configured to deflect said laser beam (14) in a first direction (x), said second deflection device (40.2) is configured to deflect said laser beam (14) in a second direction (y), and wherein said first deflection device (40.1) and said second deflection device (40.2) are configured substantially identically.

6. The system according to one of claims 1 to 3, wherein said deflection device (40) comprises a first deflection device (40.1) and a second deflection device (40.2), wherein said first deflection device (40.1) is configured to deflect said laser beam (14) in a first direction (x), said second deflection device (40.2) is configured to deflect said laser beam (14) in a second direction (y), and wherein said first deflection device (40.1) and said second deflection device (40.2) are arranged at an angle of 90° to one another.

7. The system according to one of the preceding claims, wherein said wobble device (60) is configured to control a power modulation of said laser beam (14) as a function of a position of said laser beam (14) in the wobble figure.

8. A method for material machining by means of a laser beam, comprising:
superimposing a wobble movement of the laser beam (14) according to a wobble figure and a wobble frequency onto a feed movement of said laser beam (14) corresponding to a machining path by deflecting said laser beam (14) by means of a deflection device (40),
**characterized in that**,
for carrying out the wobble movement, said deflection device (40) is controlled according to a compensated wobble movement, wherein control values for a deflection of said laser beam (14) along the wobble figure are adapted and stored depending on the wobble frequency, and are used for controlling the deflection device (40) according to the compensated wobble movement and/or a path speed of the wobble movement that varies along the wobble figure is adapted and stored depending on a position of said laser beam (14) in the wobble figure and on the wobble frequency, and is used for controlling the deflection device (40) according to the compensated wobble movement,
wherein controlling said deflection device (40) according to the compensated wobble movement comprises at least one of: compensating for a reduction in amplitude of at least a portion of the wobble figure depending on the wobble frequency; and compensating for a shape deviation of at least a portion of the wobble figure depending on the wobble frequency.

9. The method according to claim 8, wherein, in a preceding calibration step, control values for a deflection of said laser beam (14) are determined for a plurality of wobble frequencies such that, when said deflection device is controlled according to the control values, a deflection of said laser beam (14) corresponds to the desired wobble movement, in particular the desired wobble figure, and/or
wherein, in a preceding calibration step, a path speed of the wobble movement that varies along the wobble figure is determined, respectively, for a plurality of wobble frequencies such that, when the wobble movement is carried out with the varying path speed determined for the corresponding wobble frequency, a figure reproduction error is reduced.

## Revendications

1. Système destiné à usiner un matériau au moyen d'un faisceau laser, comportant :
une unité de déviation (40) pour dévier le faisceau laser (14) ; et
une unité de vobulation (60) configurée pour superposer un mouvement de vobulation du faisceau laser (14) ayant une figure de vobulation et une fréquence de vobulation, à un mouvement d'avance du faisceau laser (14) correspondant à un trajet d'usinage, en commandant l'unité de déviation (40),
**caractérisé en ce que**
l'unité de vobulation (60) est configurée pour commander l'unité de déviation (40) en fonction d'un mouvement de vobulation compensé afin d'effectuer le mouvement de vobulation, dans lequel des valeurs de commande pour une déviation du faisceau laser (14) le long de la figure de vobulation sont adaptées et stockées en fonction de la fréquence de vobulation et sont utilisées pour commander l'unité de déviation (40) en fonction du mouvement de vobulation compensé et/ou dans lequel une vitesse de trajet du mouvement de vobulation qui varie le long de la figure de vobulation est adaptée et stockée en fonction d'une position du faisceau laser (14) dans la figure de vobulation et de la fréquence de vobulation, et est utilisée pour commander l'unité de déviation (40) en fonction du mouvement de vobulation compensé,
et **en ce que**
la commande de l'unité de déviation (40) en fonction du mouvement de vobulation compensé comprend au moins une action parmi : compenser une réduction d'amplitude d'au moins une portion de la figure de vobulation en fonction de la fréquence de vobulation ; et compenser une déviation de forme d'au moins une portion de la figure de vobulation en fonction de la fréquence de vobulation.

2. Système selon la revendication 1, dans lequel les valeurs de commande pour une déviation du faisceau laser (14) le long de la figure de vobulation sont mises à l'échelle avec un facteur dépendant de la fréquence de vobulation.

3. Système selon l'une des revendications précédentes, dans lequel des valeurs de commande pour une déviation du faisceau laser (14) le long de la figure de vobulation sont respectivement stockées dans une mémoire et/ou dans un tableau pour différentes fréquences de vobulation.

4. Système selon l'une des revendications précédentes, dans lequel l'unité de déviation (40) comprend une première unité de déviation (40.1) et une seconde unité de déviation (40.2), dans lequel la première unité de déviation (40.1) est configurée pour dévier le faisceau laser (14) dans une première direction (x), la seconde unité de déviation (40.2) est configurée pour dévier le faisceau laser (14) dans une seconde direction (y), et dans lequel la première unité de déviation (40.1) et la seconde unité de déviation (40.2) ont des propriétés dynamiques sensiblement identiques.

5. Système selon l'une des revendications 1 à 3, dans lequel l'unité de déviation (40) comprend une première unité de déviation (40.1) et une seconde unité de déviation (40.2), dans lequel la première unité de déviation (40.1) est configurée pour dévier le faisceau laser (14) dans une première direction (x), la seconde unité de déviation (40.2) est configurée pour dévier le faisceau laser (14) dans une seconde direction (y), et dans lequel la première unité de déviation (40.1) et la seconde unité de déviation (40.2) sont réalisées de manière sensiblement identique.

6. Système selon l'une des revendications 1 à 3, dans lequel l'unité de déviation (40) comprend une première unité de déviation (40.1) et une seconde unité de déviation (40.2), dans lequel la première unité de déviation (40.1) est configurée pour dévier le faisceau laser (14) dans une première direction (x), la seconde unité de déviation (40.2) est configurée pour dévier le faisceau laser (14) dans une seconde direction (y), et dans lequel la première unité de déviation (40.1) et la seconde unité de déviation (40.2) sont agencées à un angle de 90° l'une par rapport à l'autre.

7. Système selon l'une des revendications précédentes, dans lequel l'unité de vobulation (60) est configurée pour commander une modulation de puissance du faisceau laser (14) en fonction d'une position du faisceau laser (14) dans la figure de vobulation.

8. Procédé d'usinage de matériau au moyen d'un faisceau laser, comprenant de :
superposer un mouvement d'avance du faisceau laser (14) correspondant à un trajet d'usinage, à un mouvement de vobulation du faisceau laser (14) correspondant à une figure de vobulation et à une fréquence de vobulation en déviant le faisceau laser (14) au moyen d'une unité de déviation (40),
**caractérisé en ce que**,
pour effectuer le mouvement de vobulation, l'unité de déviation (40) est commandée en fonction d'un mouvement de vobulation compensé, dans lequel des valeurs de commande pour une déviation du faisceau laser (14) le long de la figure de vobulation sont adaptées et stockées en fonction de la fréquence de vobulation et sont utilisées pour commander l'unité de déviation (40) en fonction du mouvement de vobulation compensé et/ou une vitesse de trajet du mouvement de vobulation qui varie le long de la figure de vobulation est adaptée et stockée en fonction d'une position du faisceau laser (14) dans la figure de vobulation et de la fréquence de vobulation, et est utilisée pour commander l'unité de déviation (40) en fonction du mouvement de vobulation compensé,
dans lequel la commande de l'unité de déviation (40) en fonction du mouvement de vobulation compensé comprend au moins une action parmi : compenser une réduction d'amplitude d'au moins une portion de la figure de vobulation en fonction de la fréquence de vobulation ; et compenser une déviation de forme d'au moins une portion de la figure de vobulation en fonction de la fréquence de vobulation.

9. Procédé selon la revendication 8, dans lequel, à une étape d'étalonnage précédente, des valeurs de commande pour une déviation du faisceau laser (14) sont déterminées pour une pluralité de fréquences de vobulation de telle sorte que, lors de la commande de l'unité de déviation en fonction des valeurs de commande, une déviation du faisceau laser (14) correspond au mouvement de vobulation souhaité, en particulier à la figure de vobulation souhaitée et/ou
dans lequel à une étape d'étalonnage précédente, une vitesse de trajet du mouvement de vobulation qui varie le long de la figure de vobulation est respectivement déterminée pour une pluralité de fréquences de vobulation de telle sorte que, lors de l'exécution du mouvement de vobulation avec la vitesse de trajet variable déterminée pour la fréquence de vobulation correspondante, une erreur de reproduction de figure est réduite.
